# EUROPEAN PATENT SPECIFICATION

(11) **EP 0 424 202 B1**
(45) Date of publication and mention of the grant of the patent: **24.11.1993**
(21) Application number: 90402688.7
(22) Date of filing: 28.09.1990
(51) Int. Cl.: B62D 5/06

(54) **Centering system more particularly for vehicles power steering**
Zentriersystem speziell für eine Fahrzeugservolenkung
Système de centrage notamment pour une direction assistée de véhicules

(30) Priority: 19.10.1989 ES 8903514
(43) Date of publication of application: 24.04.1991
(73) Proprietor: BENDIX ESPANA S.A., E-08080 Barcelona 6 (ES)
(72) Inventor: Guasch, Esteve Cortes, c/o Bendix Europe, 126 rue de Stalingrad, F-93700 Drancy (FR)
(74) Representative: Bentz, Jean-Paul

(56) References cited:
- EP-B- 0 077 710
- DD-A- 224 287
- FR-A- 2 384 664

## Description

The invention relates to a centering system of an input shaft and an output shaft, more particularly for vehicles power steering.

In power steering, it is necessary to create an effort sensation on the steering wheel when the driver wants to turn its vehicle and to settle a centering system in order to operate power steering and to inoperate it when the driver stops the effort on its steering wheel. These two functions are provided by a resilient means connecting a primary rotary element coupled to a receiving device of power (for example a steering wheel) and a secondary rotary element coupled to a driven device (for example a rack-and-pinion system), one surrounding the other.

In EP-B-O 077 710, a resilient means, arranged between a primary rotary element and a secondary rotary element, comprises two springs, each one shaped in order to constitute a rounded portion with two lug-shaped ends facing each other and extending radially outwardly in an opening of the secondary rotary element. A projection of the primary rotary element and an abutment disposed in the center of the opening are both coming, by their sides in abutting relationship with the lugs. This system is satisfactory but poses problems with volume, construction complexity and assembling.

The present invention solves these problems by providing a simple installation of two symmetrical springs which have the general shape of the capital greek letter called omega.

To achieve this result, the present invention relates to a centering system of an input shaft and an output shaft, the shafts being coaxial, one partially surrounding the other in order to define an internal shaft and an external shaft, the external shaft having portions facing, at rest, projections provided to the internal shaft, the centering system comprising two symmetrical springs located between said shafts, each one being shaped to constitute generally a rounded portion with two lug-shaped ends extending radially outwardly by coming at rest in abutting relationship simultaneously with sides of portions of the external shaft and sides of projections of the internal shaft.

According the invention, the portions of the external shaft extend radially inwardly, and the two lug-shaped ends of one spring are on opposite sides of said portions and said projections to the two lug-shaped ends of the other spring, the top of the external surface of each rounded portion of the springs coming in abutting relationship with the internal surface of the external shaft.

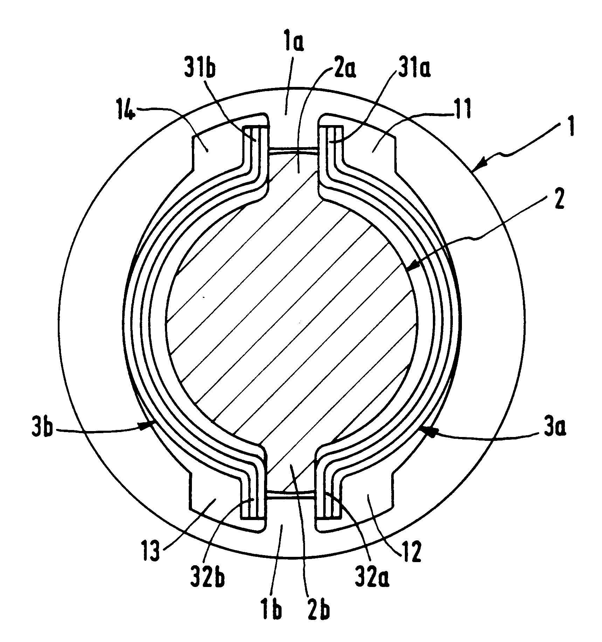

A preferred embodiment of the present invention will now be described more precisely with reference to the accompanying drawing in which :

The single figure is a section view of the resilient means arranged between the input and the output shafts.

The present invention provides a centering system aimed to connect an input shaft 2 to an output shaft 1, the shafts being respectively, in this illustrated embodiment the internal shaft 2 and the external shaft 1. The centering system comprises two symmetrical springs 3a, 3b, each one being shaped to constitute a rounded portion which opposite ends are lugs 31a, 31b, 32a, 32b extending radially outwardly in order to constitute two springs having the general shape of the capital greek letter called omega both springs are facing each other via the internal shaft 2 which is surrounded partially by them. The internal shaft has two projections 2a, 2b, the lugs 31a, 31b, 32a, 32b coming respectively in abutting relationship with each side of them.

In order to maintain each spring around the internal shaft in a central rest position, the external shaft 1 is shaped to conform generally each spring 3a, 3b by presenting two opposed portions 1a, 1b extending radially inwardly by facing the projections 2a, 2b such that the lugs 31a, 31b, 32a, 32b can also come in abutting relationship with the other side of these projections, by presenting radial recesses 11, 12, 13, 14 on both sides of the lugs and by presenting an internal surface of which the radius of curvature is such that the top of each rounded portion of each spring comes in abutting relationship with this internal surface.

When the driver turns the steering wheel in one direction, the internal shaft is turning in this direction and deforms each spring by means of their opposite lugs 31a, 32b ; each of both lugs is carried along the corresponding recess 11, 13 and this deformation causes a sliding of each rounded portion along each internal surface of the external shaft 1 ; this sliding is moving both lugs 32a, 31b against both portions 1a, 1b which drives to a movement of rotation of the external shaft 2 ; both movements of rotation of the internal 2 and external 1 shafts are shifted such that each portion 1a, 1b is no longer facing each projection 2a, 2b in order to operate power steering and to create an effort sensation to the driver.

As soon as the driver stops the effort on its steering wheel, both springs 3a, 3b bring back both shafts 1, 2 in a central position such that each portion 1a, 1b can face each projection 2a, 2b to inoperate power steering.

In case of a failure of power steering, the rotation of the internal shaft will carry the lugs 31a, 31b, 32a, 32b along the corresponding recess and their movement will be stopped by a corresponding mechanical abutment provided on the external shaft in order to prevent a break of the springs.

The man skilled in the art will be able to modify this centering system ; for instance, each spring could be made in one part or could be consisted of several leaves put together. Secondly, the radius of curvature of both rounded portions can be such that each one comes in abutting relationship with each rounded portion of the internal shaft 2. Obviously, the primary element constituting the internal shaft could be the output shaft and so the secondary element constituting the external shaft could be the input shaft.

## Claims

1. Centering system of an input shaft and an output shaft, said shafts being coaxial, one partially surrounding the other in order to define an internal shaft (2) and an external shaft (1), said external shaft having portions (1a, 1b) facing, at rest, projections (2a, 2b) provided to the internal shaft (2), said centering system comprising two symmetrical springs (3a, 3b), located between said shafts, each one being shaped to constitute generally a rounded portion with two lug-shaped ends (31a, 32a, 31b, 32b) extending radially outwardly by coming at rest in abutting relationship simultaneously with sides of portions (1a, 1b) of the external shaft (1) and sides of projections (2a, 2b) of the internal shaft (2), characterized in that the portions (1a, 1b) of the external shaft extend radially inwardly, and in that the two lug-shaped ends (31a, 32a) of one spring are on opposite sides of said portions (1a, 1b) and said projections (2a, 2b) to the two lug-shaped ends (31b, 32b) of the other spring, the top of the external surface of each rounded portion of said springs coming in abutting relationship with the internal surface of the external shaft (1).

2. Centering system according to Claim 1, characterized in that each rounded portion of the springs (3a, 3b) is coming in abutting relationship with each rounded portion of the internal shaft (2).

3. Centering system according to Claim 1 or 2, characterized in that the external shaft has radial recesses (11, 12, 13, 14) on both sides of each said portion (1a, 2b).

4. Centering system according to anyone of preceding claims characterized in that the internal shaft is the output shaft and the external shaft is the input shaft.

## Patentansprüche

1. Zentriersystem für eine An- und Abtriebswelle, die koaxial zueinander und teilweise einander unschließend angeordnet sind und eine innere Welle (2) und eine äußere Welle (1) bilden, wobei Abschnitte (1a, 1b) der äußeren Welle in RuhelageVorsprüngen (2a, 2b) an der inneren Welle (2) zugekehrt sind, wobei das Zentriersystem zwei symmetrische Federn (3a, 3b) zwischen den Wellen aufweist, von denen jede einem allgemein gerundeten Abschnitt mit zwei nasenförmigen Enden (31a, 32a, 31b, 32b) aufweist, die in Ruhelage zugleich an Seiten der Abschnitte (1a, 1b) der äußeren Welle (1) und Seiten der Vorsprünge (2a, 2b) der inneren Welle (2) anliegen, dadurch gekennzeichnet, daß die Abschnitte (1a, 1b) der äußeren Welle sich radial nach innen erstrecken und daß die beiden nasenformigen Enden (31a, 32a) der einen Feder an Seiten der Abschnitte (1a, 1b) und der Vorsprünge (2a, 2b) entgegengesetzt zu den beiden nasenförmigen Enden (31b, 32b) der anderen Feder sind, wobei die Kuppe der Außenfläche des gerundeten Abschnitts jeder Feder an der Innenfläche der äußeren Welle (1) anliegt.

2. Zentriersystem nach Anspruch 1, dadurch gekennzeichnet, daß jeder gerundete Abschnitt der Federn (3a, 3b) an jeweils einem gerundeten Abschnitt der inneren Welle (2) anliegt.

3. Zentriersystem nach Anspruch 1 oder 2, dadurch gekennzeichnet, daß die äußeren Welle radiale Ausnehmungen (11, 12, 13, 14) auf beiden Seiten jeden Abschnitts (1a, 1b) aufweisen.

4. Zentriersystem nach einem der vorhergehenden Ansprüche, dadurch gekennzeichnet, daß die innere Welle die Abtriebswelle und die äußere Welle die Antriebswelle ist.

## Revendications

1. Systéme de centrage d'un arbre d'entrée et d'un arbre de sortie, lesdits arbres étant coaxiaux l'un entourant partiellement l'autre,de manière à définir un arbre intérieur (2) et un arbre extérieur (1), ledit arbre extérieur comprenant des parties (1a,1b) se faisant face ,au repos, des saillies (2a,2b étant prévues sur l'arbre intérieur (2), ledit système de centrage comprenant deux ressorts symétriques (3a,3b) disposés entre les arbres,chacun de ces ressorts étant formé de manière à constituer une partie arrondie avec deux extrémités en forme de languettes (31a,32a,31b,32b) s'étendant radialement vers l'extérieur en venant au repos buter simultanément avec les côtés des parties (1a,1b) de l'arbre extérieur (1) et les côtés en saillie (2a,2b) de l'arbre intérieur (2), caractérisé en ce ce que les parties (1a,1b) de l'arbre extérieur s'étendent radialement vers l'intérieur et en ce que les deux extrémités en forme de languettes(31a,32a) d'un ressort sont sur les côtés opposés des dites parties (1a,1b) et les saillies (2a,2b) aux deux extrémités en forme de languettes (31b,32b) de l'autre ressort , le sommet de la surface extérieure de chaque partie arrondie de chaque ressort venant buter contre la surface intérieure de l'arbre extérieur (1).

2. Système de centrage selon la revendication 1, caractérisé en ce que chaque partie arrondie des ressorts (3a,3b ) vient buter avec chaque partie arrondie de l'arbre intérieur (2).

3. Système de centrage selon les revendications 1 ou 2 caractérisé en ce que l'arbre extérieur comporte des évidements (11,12,13,14 )sur les deux côtés de la partie (1a, 2b).

4. Système de centrage selon n'importe laquelle des revendications précédentes,caractérisé en ce que l'arbre intérieur est l'arbre de sortie et l'arbre extérieur est l'arbre d'entrée.
